# EUROPEAN PATENT APPLICATION

(11) **EP 4 372 635 A1**
(43) Date of publication of application: **22.05.2024**
(21) Application number: 23194812.6
(22) Date of filing: 01.09.2023
(51) Int. Cl.: G06Q 10/047, G06Q 10/083

(54) **DELIVERY PLAN GENERATION PROGRAM, DELIVERY PLAN GENERATION METHOD, AND INFORMATION PROCESSING APPARATUS**

(30) Priority: 18.11.2022 JP 2022185233
(71) Applicant: FUJITSU LIMITED, Kawasaki-shi, Kanagawa 211-8588 (JP)
(72) Inventor: IKEDA, Hiroshi, Kawasaki-shi, Kanagawa, 211-8588 (JP)
(74) Representative: Hoffmann Eitle

(57) **Abstract**

An information processing apparatus generates, based on package data in which dates, attributes of packages, and package amounts are associated and for each of the attributes, a first vector indicating statistical values for the package amounts on each of a plurality of date types. The information processing apparatus assigns, based on similarity between the first vector and each of a plurality of second vectors which correspond to a plurality of different date patterns where each date pattern indicates at least one date type out of the plurality of date types, each of the attributes to at least one date pattern out of the plurality of date patterns. The information processing apparatus generates plan data indicating delivery dispatches for delivering packages corresponding to the assigned attributes for each of at least one date pattern out of the plurality of date patterns.

## Description

### FIELD

The embodiments discussed herein relate to a delivery plan generation program, a delivery plan generation method, and an information processing apparatus.

### BACKGROUND

To improve business efficiency, a computer may search for the optimal solution for a work schedule using a mathematical programming solver. As an example of business optimization, a computer may generate a delivery plan for delivery dispatches to cover a given delivery demand for packages. As one example, a computer defines constraints based on past demand for package deliveries, defines an objective function that indicates the cost of delivery dispatches, and searches for a delivery plan solution that minimizes the value of the objective function within a range that satisfies the constraints. The trend in the package amount may differ depending on the date type, such as whether a day is a weekday or a holiday. For this reason, a regular delivery plan may be generated for each date type.

Note that a delivery plan generation apparatus that generates a plurality of delivery patterns that satisfy the constraints and inputs the plurality of delivery patterns into an annealing machine to narrow down to a certain number of delivery patterns that reduce the overall delivery cost has been proposed. In addition, a delivery planning system that receives parameters including a designation of weekday or holiday from the user, extracts delivery destinations, which are included in delivery records and correspond to parameters from past performance data, and generates regular delivery plans to visit the extracted delivery destinations has also been proposed.

See, for example, Japanese Laid-open Patent Publication No. 2021-111276.

See also Japanese Laid-open Patent Publication No. 2021-135787.

When regular delivery plans are generated independently for each date type, there is a fall in the number of delivery dispatches that commonly operate on different date types (as one example, on both weekdays and holidays). In this case, there will be an increase in the number of types of delivery dispatches with different routes and times, resulting in the risk of an increase in the management cost for managing the delivery dispatches. On the other hand, generating a delivery plan by trial and error so that many delivery dispatches are common between different date types while still considering differences in the package amounts places a heavy burden on the person in charge.

### SUMMARY

According to one aspect, it is an object of the present disclosure to efficiently generate a regular delivery plan.

According to an aspect, there is provided a delivery plan generating program that causes a computer to execute a process including: generating, based on package data in which dates, attributes of packages, and package amounts are associated and for each of the attributes, a first vector indicating statistical values for the package amounts on each of a plurality of date types; assigning, based on similarity between the first vector and each of a plurality of second vectors which correspond to a plurality of different date patterns where each date pattern indicates at least one date type out of the plurality of date types, each of the attributes to at least one date pattern out of the plurality of date patterns; and generating plan data indicating delivery dispatches for delivering packages corresponding to the assigned attributes for each of at least one date pattern out of the plurality of date patterns.

### BRIEF DESCRIPTION OF DRAWINGS

FIG. 1 is a diagram useful in explaining an information processing apparatus according to a first embodiment;
FIG. 2 depicts example hardware of an information processing apparatus according to a second embodiment;
FIG. 3 depicts an example operation of delivery dispatches between points;
FIG. 4 depicts an example calendar and example date types;
FIG. 5 depicts one example of a package table;
FIG. 6 depicts one example of a pattern table;
FIG. 7 depicts one example of a regular dispatches learning table;
FIG. 8 depicts one example of generation of a package vector for each package ID;
FIG. 9 depicts an example of a pattern vector table;
FIG. 10 depicts an example of division and classification of a package vector;
FIG. 11 depicts an example calculation of the total weight for each date pattern;
FIG. 12 depicts one example of determining date patterns to be used for planning regular dispatches;
FIG. 13 depicts an example reclassification of package vectors;
FIG. 14 depicts one example of division, classification, and reclassification of a package vector;
FIG. 15 is a block diagram illustrating example functions of the information processing apparatus;
FIG. 16 depicts an example of a point table and a regular dispatches table;
FIG. 17 is a flowchart depicting an example procedure of optimization of regular dispatches; and
FIG. 18 is a second part of a flowchart depicting an example procedure of optimization of regular dispatches.

### DESCRIPTION OF EMBODIMENTS

Several embodiments will be described below with reference to the accompanying drawings.

### [First Embodiment]

A first embodiment will now be described.

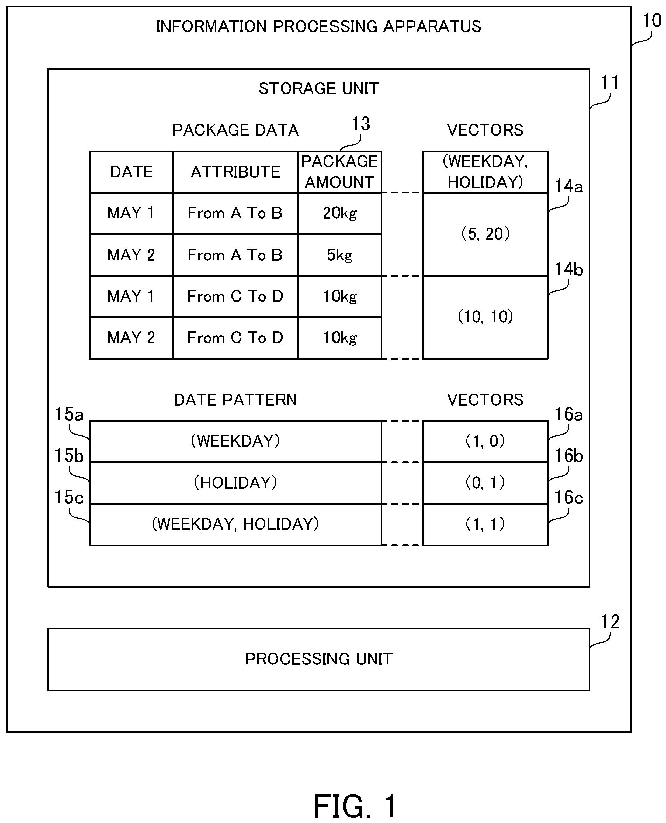

FIG. 1 is a diagram useful in explaining an information processing apparatus according to the first embodiment.

An information processing apparatus 10 according to the first embodiment generates a delivery plan for delivering packages. A delivery dispatch may be any mode of transport that is able to carry cargo, such as a vehicle or train, a ship, or an airplane. The generated delivery plan is used, for example, in the work of a logistics business. The information processing apparatus 10 may be a client apparatus or a server apparatus. The information processing apparatus 10 may be referred to as a "computer", a "delivery plan generation apparatus", or an "optimization apparatus".

The information processing apparatus 10 includes a storage unit 11 and a processing unit 12. The storage unit 11 may be volatile semiconductor memory, such as random access memory (RAM), or may be non-volatile storage, such as a hard disk drive (HDD) or flash memory. As examples, the processing unit 12 is a processor such as a central processing unit (CPU), a graphics processing unit (GPU), or a digital signal processor (DSP). However, the processing unit 12 may include an electronic circuit such as an application specific integrated circuit (ASIC) or a field programmable gate array (FPGA). As one example, the processor executes programs stored in a memory, such as a RAM (which may be the storage unit 11). A group of processors may be referred to as a "multiprocessor" or simply as a "processor."

The storage unit 11 stores package data 13 indicating package delivery demand. The package delivery demand may be performance values for the past, or may be predicted values for the future. The package data 13 associates dates, package attributes, and package amounts. Dates are categorized into a plurality of date types based on a calendar. A date type may be referred to as a "type of day". As examples, the date types include weekdays and holidays. The date types may also include Saturdays and specific days. The expression "specific day" refers to a day which is not a holiday or a Saturday but is a day where the package amount tends to differ from other days, such as a day following a holiday or the end of the month.

The attributes of a package indicate a classification of packages that may be loaded together onto the same delivery dispatch, and as one example are a combination of a departure location, a departure time, an arrival location, and an arrival time. In this case, packages for which at least one of the departure location, the departure time, the arrival location, and the arrival time differs are regarded as packages with different attributes. The attributes may include differences between ambient and refrigerated shipping, and may include size categories. As examples, the package amount may be a weight, a volume, or a number of boxes. In the package data 13, the package amounts of packages with the same date and attributes are summed.

Based on the package data 13, the processing unit 12 generates a first vector indicating statistical values of the package amounts of each of the plurality of date types, for each attribute of the packages. As one example, the processing unit 12 generates a vector 14a for packages to be delivered from location A to location B, and a vector 14b for packages to be delivered from location C to location D. The vectors 14a and 14b include a plurality of dimensions corresponding to the plurality of date types. As one example, the vectors 14a and 14b include a statistical value for a package amount on a weekday and a statistical value for a package amount on a holiday. These statistical values may be averages, medians, or maximum values of the package amounts, and may be corrected using a standard deviation.

The processing unit 12 calculates, for each attribute of packages, a degree of similarity between the first vector described above and each of a plurality of second vectors corresponding to a plurality of date patterns, which indicate combinations of one or more date types. A date pattern may be referred to as a "combination of date types", a "combination of types of day", or a "day of week (DOW) pattern". As one example, the processing unit 12 calculates the degree of similarity between the vector 14a and the vectors 16a, 16b and 16c corresponding to date patterns 15a, 15b and 15c for packages to be delivered from the location A to the location B.

As one example, the date patterns 15a, 15b, and 15c are power sets of date types with the empty set excluded. As examples, the date pattern 15a includes weekdays but does not include holidays and the date pattern 15b includes holidays but does not include weekdays. The date pattern 15c includes weekdays and holidays. The vectors 16a, 16b, and 16c indicate whether each of the plurality of date types has been selected. As one example, the vectors 16a, 16b, 16c have non-zero (for example, one) dimensions corresponding to selected date types and zero dimensions corresponding to non-selected date types. As one example, the degree of similarity is cosine similarity.

The processing unit 12 assigns each attribute of packages to at least one date pattern based on the calculated degree of similarity. As one example, the processing unit 12 assigns each attribute of packages to the date pattern with the highest degree of similarity. As one example, when the second vector that has the highest degree of similarity with the vector 14a is the vector 16b, the processing unit 12 assigns information on packages to be delivered from the location A to the location B to the date pattern 15b. When the second vector with the highest degree of similarity with the vector 14b is the vector 16c, the processing unit 12 assigns information on packages to be delivered from the location C to the location D to the date pattern 15c.

The processing unit 12 generates plan data indicating delivery dispatches for delivering packages corresponding to the assigned attribute separately for each of at least one date pattern out of the plurality of date patterns. As one example, the processing unit 12 uses a vehicle routing problem with time window (VRPTW) solver to search for a delivery plan with the lowest cost. When doing so, the processing unit 12 may perform optimization independently for each date pattern. As one example, the plan data indicates the route and time of one or more delivery dispatches. The processing unit 12 may narrow down the date patterns for generating the plan data based on the total package amount of packages corresponding to the assigned attribute.

Based on the plan data in date pattern units, it is possible to determine regular delivery dispatches that operate on each of the plurality of date types. As one example, the processing unit 12 determines the delivery dispatches that operate on weekdays by combining the optimization results for the date patterns 15a and 15c, and determines the delivery dispatches that operate on holidays by combining the optimization results for the date patterns 15b and 15c. Note that the processing unit 12 may plan extra dispatches with a smaller loading capacity than the regular dispatches to cover packages that are not delivered by the regular dispatches described above.

As described above, the information processing apparatus 10 according to the first embodiment generates, based on the package data 13, the first vector indicating statistical values of package amounts in keeping with the type of date for each attribute of the packages. The information processing apparatus 10 assigns attributes of packages to date patterns based on the degree of similarity between the first vector and each of the plurality of second vectors corresponding to a plurality of date patterns indicating a combination of date types. The information processing apparatus 10 generates plan data of delivery dispatches for delivering packages corresponding to the assigned attributes for each of at least one date pattern.

By doing so, when there are packages with a high occurrence frequency that is common to two or more date types, it is likely that a common delivery dispatch will be planned for those two or more date types. This means that compared with a case where delivery dispatches are planned independently for each date type, there is a fall in the number of delivery dispatches with different routes and times, which reduces the management cost for managing the delivery dispatches. The correspondence between the attributes of packages and the date patterns is determined based on the degree of similarity between vectors. This means that the burden placed on the person in charge is reduced compared to a case where the correspondence is adjusted manually by trial and error. A dispatch plan with a low operational cost is generated. By operating as described above, a regular delivery plan is generated more efficiently.

Note that the second vectors may include non-zero elements corresponding to selected date types and zero elements corresponding to non-selected date types. By doing so, an appropriate date pattern is determined with high accuracy from the distribution of package amounts in keeping with the date types.

The information processing apparatus 10 assigns a certain attribute to a first date pattern, and when the first date pattern does not include a date type corresponding to a non-zero statistical value in the first vector, such attribute may be additionally assigned to a second date pattern which includes that date type. By doing so, there is a fall in the number of packages not covered by regular dispatches. The information processing apparatus 10 may calculate the total package amounts using the first vector for each of a plurality of date patterns, and select a date pattern for generating plan data based on the total package amounts. By doing so, regular dispatches with few packages to be delivered are suppressed, which reduces the cost of the regular dispatches.

The information processing apparatus 10 may reassign an attribute of a package assigned to a date pattern that is not used to generate the plan data to any date pattern used to generate the plan data, based on the degree of similarity between the second vectors. By doing so, the number of packages that are not covered by regular dispatches falls, which improves the accuracy of optimization in date pattern units.

The information processing apparatus 10 calculates a representative package amount for each attribute using the first vector for each date pattern, and determines delivery dispatches based on the correspondence between the attributes of packages and the representative package amounts. By doing so, the information processing apparatus 10 is able to efficiently optimize the delivery dispatches using a mathematical programming solver, such as a VRPTW solver. For each date type, the information processing apparatus 10 may use plan data generated for date patterns including that date type to determine the delivery dispatches that operate on days corresponding to that date type. By doing so, regular dispatches are specified for each date type, and the operation of delivery dispatches is made more efficient.

The information processing apparatus 10 may also calculate evaluation values indicating the cost of delivery dispatches based on the generated plan data, and optimize the parameter values used for planning the delivery dispatches based on the evaluation values. These parameter values may be parameter values used in generating the first vector or may be parameter values used in selecting the date patterns to be used for generating the plan data. By doing so, a delivery plan with a lower cost is generated. The attributes of packages may include departure location, departure time, arrival location and arrival time. By doing so, packages are sorted with appropriate granularity, which raises the optimization accuracy for delivery dispatches.

### [Second Embodiment]

A second embodiment will now be described.

An information processing apparatus 100 according to the second embodiment optimizes a delivery plan of a logistics business in order to reduce cost. The delivery plan includes a route along which a delivery dispatch travels and the arrival and departure times of points on the route for each of a plurality of delivery dispatches. In this second embodiment, the delivery dispatches are assumed to be mainly trucks. The information processing apparatus 100 may be a client apparatus or a server apparatus. The information processing apparatus 100 may be referred to as a "computer", a "delivery plan generation apparatus", or an "optimization apparatus". The information processing apparatus 100 corresponds to the information processing apparatus 10 in the first embodiment.

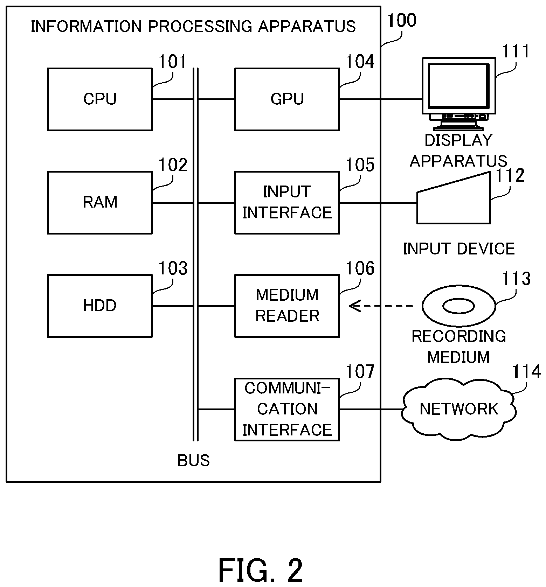

FIG. 2 depicts example hardware of an information processing apparatus according to the second embodiment.

The information processing apparatus 100 includes a CPU 101, a RAM 102, an HDD 103, a GPU 104, an input interface 105, a medium reader 106, and a communication interface 107 that are connected to a bus. The CPU 101 corresponds to the processing unit 12 in the first embodiment. The RAM 102 or the HDD 103 corresponds to the storage unit 11 in the first embodiment.

The CPU 101 is a processor that executes instructions of a program. The CPU 101 loads the program and data stored in the HDD 103 into the RAM 102 and executes the program. The information processing apparatus 100 may include a plurality of processors.

The RAM 102 is volatile semiconductor memory that temporarily stores the program to be executed by the CPU 101 and data used for computation by the CPU 101. The information processing apparatus 100 may include another type of volatile memory aside from RAM.

The HDD 103 is nonvolatile storage that stores software programs such as an operating system (OS), middleware, and application software, in addition to data. The information processing apparatus 100 may include other types of non-volatile storage, such as flash memory and/or a solid state drive (SSD).

The GPU 104 performs image processing in cooperation with the CPU 101 and outputs images to a display apparatus 111 connected to the information processing apparatus 100. As examples, the display apparatus 111 is a cathode ray tube (CRT) display, a liquid crystal display, an organic electro luminescence (EL) display, or a projector. Other types of output device, such as a printer, may also be connected to the information processing apparatus 100. The GPU 104 may also be used as a general-purpose computing on graphics processing unit (GPGPU). The GPU 104 may execute a program according to instructions from the CPU 101. The information processing apparatus 100 may also include volatile semiconductor memory aside from the RAM 102 as GPU memory.

The input interface 105 receives an input signal from an input device 112 that is connected to the information processing apparatus 100. As examples, the input device 112 is a mouse, a touch panel, or a keyboard. A plurality of input devices may be connected to the information processing apparatus 100.

The medium reader 106 is a reader apparatus that reads programs and data recorded on a recording medium 113. As examples, the recording medium 113 is a magnetic disk, an optical disc, or a semiconductor memory. Magnetic disks include flexible disks (FDs) and HDD. Optical discs include compact discs (CDs) and digital versatile discs (DVDs). The medium reader 106 copies a program and data read from the recording medium 113 into another recording medium, such as the RAM 102 or the HDD 103. The read program may be executed by the CPU 101.

The recording medium 113 may be a portable recording medium. The recording medium 113 may be used to distribute programs and data. The recording medium 113 and the HDD 103 may also be referred to as "computer-readable recording media".

The communication interface 107 communicates with other information processing apparatuses via a network 114. The communication interface 107 may be a wired communication interface connected to a wired communication apparatus, such as a switch or a router, or a wireless communication interface connected to a wireless communication apparatus, such as a base station or an access point.

Next, regular dispatches that operate on the same schedule for each date type will be described.

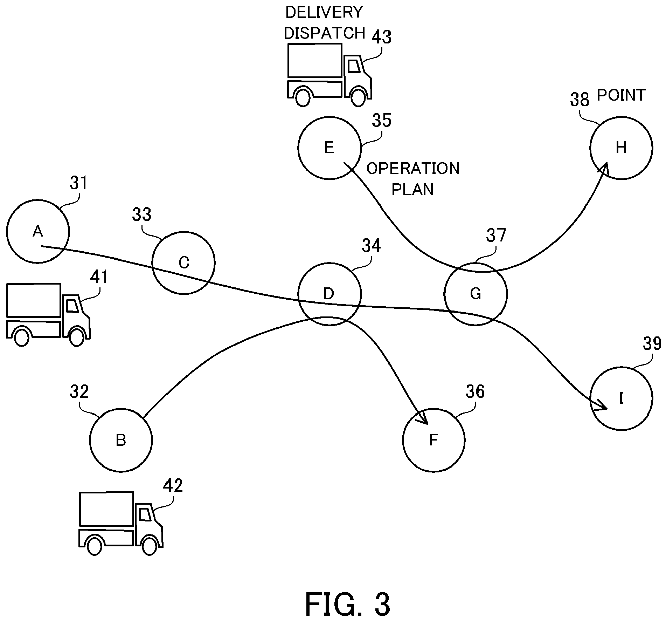

FIG. 3 depicts an example operation of delivery dispatches between points.

The logistics business operates a plurality of delivery dispatches that visit a plurality of points. Each point is a distribution facility for loading and unloading packages. A single delivery dispatch departs from a designated starting point within a designated time period, passes via one or more intermediate points during each designated time period, and arrives at a designated terminal point within a designated time period. In the second embodiment, it is assumed that the starting point and the terminal point are the same, so that each delivery dispatch returns to the same point on the same day.

A departure point, a departure time period, an arrival point, and an arrival time period are specified for each package. A package is loaded onto any delivery dispatch that passes the designated departure point during the designated departure time period, and is unloaded from any delivery dispatch that passes through the designated arrival point during the designated arrival time period. Adjacency between points may be expressed as a weighted undirected graph. This graph includes a plurality of nodes corresponding to the plurality of points and a plurality of edges that connect between the nodes. Edges have weights that indicate at least one of travel distance and travel time.

As one example, the plurality of points include points 31, 32, 33, 34, 35, 36, 37, 38, and 39 (that is, points A, B, C, D, E, F, G, H, and I). A delivery dispatch 41 passes the points 31, 33, 34, 37, and 39 in that order. A delivery dispatch 42 passes the points 32, 34, and 36 in that order. A delivery dispatch 43 passes the points 35, 37, and 38 in that order. The delivery dispatch 41 may deliver a package from the point 33 to the point 37, a package from the point 34 to the point 39, and the like. However, packages may also be transferred between different delivery dispatches at any point.

Although the tendency of the package amount is often the same between dates of the same date type, such as weekdays and holidays, the amount often differs between dates of different date types. For this reason, a logistics business plans regular dispatches that operate on a schedule determined according to each date type. When there is a package that is not deliverable by regular dispatches, the logistics business operates an extra dispatch to deliver packages that are not delivered by the regular dispatches. As one example, an extra dispatch is a delivery dispatch with a smaller loading capacity than a regular dispatch.

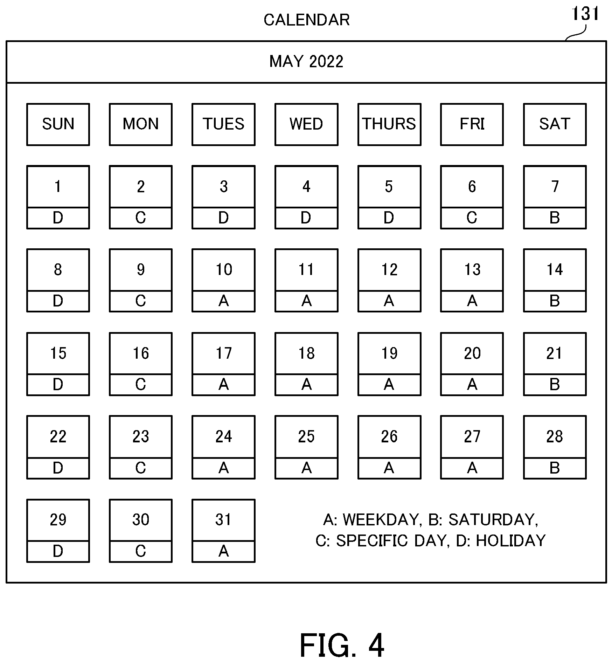

FIG. 4 depicts an example calendar and example date types.

The calendar 131 indicates dates from May 1, 2022 to May 31, 2022. In the second embodiment, dates are classified into four types: weekdays; Saturdays; specific days; and holidays. A date type may be referred to as a day type or a day of week (DOW) type. A "holiday" is a Sunday or a national holiday. A "Saturday" is a Saturday that is not a national holiday. A "specific day" is a day that satisfies a specific condition, out of days that do not qualify as a "holiday" or a "Saturday". In the second embodiment, the specific condition is a day following immediately after a "holiday". This means that a Monday may qualify as a specific day. A "weekday" is a day that does not qualify as any of a "holiday", a "Saturday", and a "specific day".

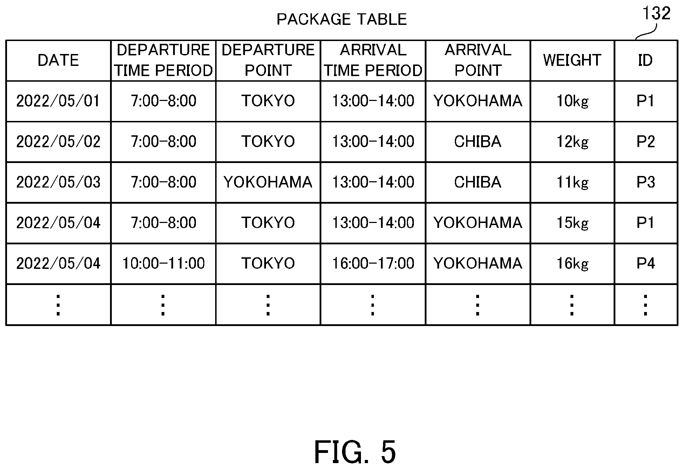

FIG. 5 depicts one example of a package table.

The information processing apparatus 100 analyzes past package amounts and optimizes the operation schedule of the regular dispatches so as to minimize the cost. A package table 132 indicates package delivery records from the past. The package table 132 is stored in the information processing apparatus 100.

The package table 132 stores a plurality of records that each include a date, a departure time period, a departure point, an arrival time period, an arrival point, a weight, and a package ID. The date indicates the date on which the package was delivered. The departure point is a point name for identifying the point from which the package was shipped. The departure time period is a period in which the package departed from the departure point. The arrival point is a point name for identifying the point at which the package arrived. The arrival time period is the time period in which the package arrived at the arrival point. The departure time period and arrival time period are defined using a period of one hour, for example.

The "weight" is an indicator of the package amount. In the second embodiment, a set of packages with the same departure time period, departure point, arrival time period, and arrival point are regarded as the same "package". The "weight" of a package is the total weight of packages for which all of the departure time period, the departure point, the arrival time period, and the arrival point are the same. The package ID identifies the "package". Accordingly, out of the records included in the package table 132, records with the same departure time period, departure point, arrival time period, and arrival point are assigned the same package ID regardless of the date. Note that the "package" may be more precisely classified according to size, shape, and the like.

Here, out of the packages, there are packages that exhibit a tendency to have the same package amount across two or more date types, such as packages that frequently occur on Saturdays and holidays, and packages that regularly occur regardless of the date type. On the other hand, when the records in the package table 132 are classified into date types and regular dispatches are optimized independently for each date type, there is the risk that almost all regular dispatches that operate on the same schedule between different date types may disappear. In such case, the number of types of regular dispatches may increase, and there is a risk that management cost, such as ensuring safety on the operation routes, may increase. For this reason, the information processing apparatus 100 classifies the package IDs into a plurality of date patterns and optimizes the regular dispatches for in date pattern units.

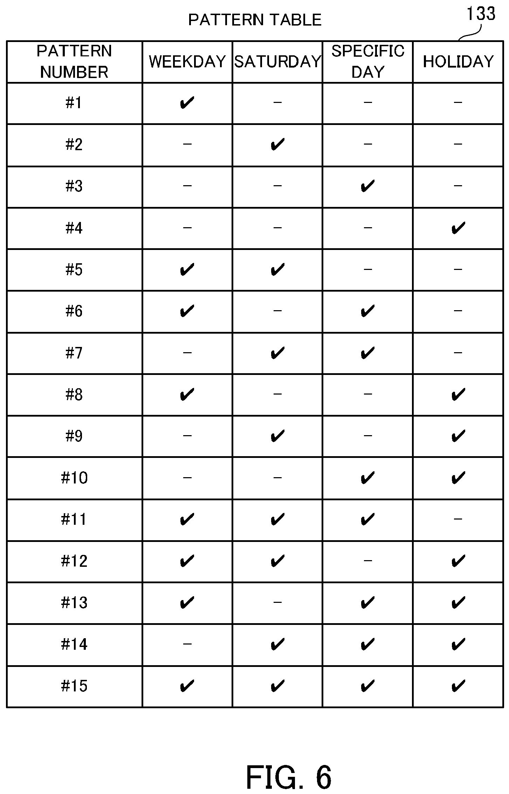

FIG. 6 depicts one example of a pattern table.

The pattern table 133 defines date patterns that indicate a selection method for selecting one or more out of the four date types. The pattern table 133 is stored in the information processing apparatus 100. A date pattern may also be referred to as a "combination of day types", a "combination of date types, a "date type pattern", a "day of week pattern", or the like. A date pattern is a power set of date types, excluding the empty set that does not include any date types. Accordingly, fifteen date patterns are defined from the four date types.

Date pattern #1 includes only weekdays. Date pattern #2 includes only Saturdays. Date pattern #3 includes only specific days. Date pattern #4 includes only holidays. Date pattern #5 includes only weekdays and Saturdays. Date pattern #6 includes only weekdays and specific days. Date pattern #7 includes only Saturdays and specific days. Date pattern #8 includes only weekdays and holidays. Date pattern #9 includes only Saturdays and holidays. Date pattern #10 includes only specific days and holidays. Date pattern #11 includes only weekdays, Saturdays and specific days. Date pattern #12 includes only weekdays, Saturdays and holidays. Date pattern #13 includes only weekdays, specific days and holidays. Date pattern #14 includes only Saturdays, specific days and holidays. Date pattern #15 includes every date type.

The information processing apparatus 100 assigns each package ID to at least one date pattern. The information processing apparatus 100 plans regular dispatches for delivering packages with the assigned package ID for each out of at least one of the fifteen date patterns. The information processing apparatus 100 combines the schedules of the regular dispatches that have been optimized for each date pattern to generate a schedule of regular dispatches for each date type. By doing so, a schedule of regular dispatches is generated so that there are as many common regular dispatches as possible across a plurality of the date types.

The regular dispatches that operate on weekdays are the union set produced by summing the regular dispatches determined for the date patterns #1, #5, #6, #8, #11, #12, #13, and #15. The regular dispatches that operate on Saturdays are the union set produced by summing the regular dispatches determined for the date patterns #2, #5, #7, #9, #11, #12, #14, and #15. The regular dispatches that operate on specific days are the union set produced by summing the regular dispatches determined for the date patterns #3, #6, #7, #10, #11, #13, #14, and #15. The regular dispatches that operate on holidays are the union set produced by summing the regular dispatches determined for the date patterns #4, #8, #9, #10, #12, #13, #14, and #15.

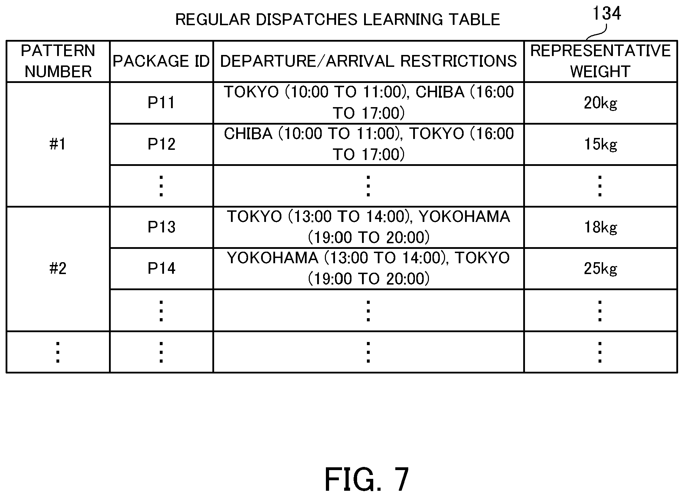

FIG. 7 depicts one example of a regular dispatches learning table.

A regular dispatches learning table 134 stores learning data for searching for optimal regular dispatches in date pattern units. The regular dispatches learning table 134 is stored in the information processing apparatus 100. The regular dispatches learning table 134 associates a pattern number, package IDs, departure/arrival restrictions, and a representative weight. The pattern number identifies the date pattern. The package IDs are the package IDs assigned to the date pattern indicated by the pattern number. The departure/arrival restrictions are a combination of a departure point, a departure time period, an arrival point, and an arrival time period corresponding to the package ID.

The representative weight is a representative value of the weight of the package indicated by the package ID, and is calculated based on the package table 132. The representative weight may be an average or median weight. Alternatively, the representative weight may be calculated by "(average value + α × standard deviation)". α is a positive coefficient decided in advance. By appropriately setting the coefficient α, the number of packages that are not covered by regular dispatches is reduced.

The information processing apparatus 100 uses a VRPTW solver to determine the optimal regular dispatches in date pattern units based on the regular dispatches learning table 134. The information processing apparatus 100 generates a large number of delivery dispatch candidates and selects the delivery dispatches to operate as regular dispatches and delivery dispatches to operate as extra dispatches out of such candidates. Extra dispatches deliver packages with package IDs that are not covered by regular dispatches. The information processing apparatus 100 selects the regular dispatches so that the operation cost is minimized, on the condition that all the packages with an assigned package ID are deliverable.

As one example, the information processing apparatus 100 defines an objective function as f = Σ(cᵢ+dᵢ)xᵢ. Here, ci indicates a fixed cost in keeping with the type (that is, regular dispatch or extra dispatch) of delivery dispatch candidate i. dᵢ indicates a variable cost that depends on travel time, travel distance, weight of cargo to be loaded, and the like. xᵢ is a variable indicating whether the delivery dispatch candidate i is to operate. xᵢ = 1 indicates that the delivery dispatch candidate i is to operate, and xᵢ = 0 indicates that the delivery dispatch candidate i is not to operate. The information processing apparatus 100 searches for xᵢ that minimizes the value of the objective function f within a range that satisfies the following constraints. Optimization of the regular dispatches includes minimizing the number of regular dispatches that operate.

The constraints include the transportation of each package on any one of the delivery dispatches from the departure point to the arrival point. The constraints also include that the total weight of packages delivered by each delivery dispatch do not exceed the loading capacity of that delivery dispatch. The constraints further include that each delivery dispatch takes a route that departs from a point and returns to the same point. The constraints also include that each package needs to be loaded only on a delivery dispatch that is present at the departure point during the departure time period. The constraints also include that each package needs to be unloaded only from a delivery dispatch that is present at the arrival point during the arrival time period. The constraints also include that the daily travel time and travel distance of each delivery dispatch do not exceed certain upper limits.

The information processing apparatus 100 evaluates the efficiency of the optimized regular dispatches by calculating an evaluation value as follows. The information processing apparatus 100 calculates the management cost by multiplying a unit management cost h by the number of types of regular dispatches. The number of types of regular dispatches is the total number of regular dispatches determined for the fifteen date patterns. Regular dispatches with the same route and departure/arrival time are regarded as regular dispatches of the same type, even if the date type is different. The unit management cost h is an indirect cost of managing one type of regular dispatch, and includes the cost for securing a safe travel route.

In addition, the information processing apparatus 100 acquires package data for the past N days for evaluation purposes. The information processing apparatus 100 uses the acquired package data to calculate the operation cost for each of the N days according to Σ (fixed operation cost f + variable operation cost r). This operation cost includes the operation cost of the regular dispatches and the operation cost of the extra dispatches for delivering packages not delivered by the regular dispatches. The fixed operation cost f includes truck maintenance costs and the like. The variable operation cost r is proportional to travel time and travel distance, and includes fuel cost, driver labor cost, and the like.

After this, the information processing apparatus 100 calculates an evaluation value according to 1/N × Σ operation cost per day + weighting W × management cost. This means that the evaluation value is the weighted sum of the daily average operation cost and management cost. The weighting W is a coefficient that is decided in advance. The information processing apparatus 100 outputs the evaluation value together with the optimization result for the regular dispatches. As one example, the user compares the evaluation value with the evaluation value of the currently scheduled regular dispatches to check whether the efficiency of the regular dispatches is improving. The user may also refer to the evaluation value for example to determine whether to put the optimization result into operation.

Next, the assignment of package IDs to date patterns will be described.

As a conceivable method, an experienced worker may refer to the package table 132 and determine appropriate associations between package IDs and date patterns through trial and error. However, this method may place a large burden on the worker. In addition, past experience is not usable when new points are added, existing points are consolidated, or there are large changes in the trends of package amounts, which may make it difficult to appropriately associate the IDs and date patterns. For this reason, in the second embodiment, the information processing apparatus 100 automatically determines appropriate associations between the package IDs and date patterns.

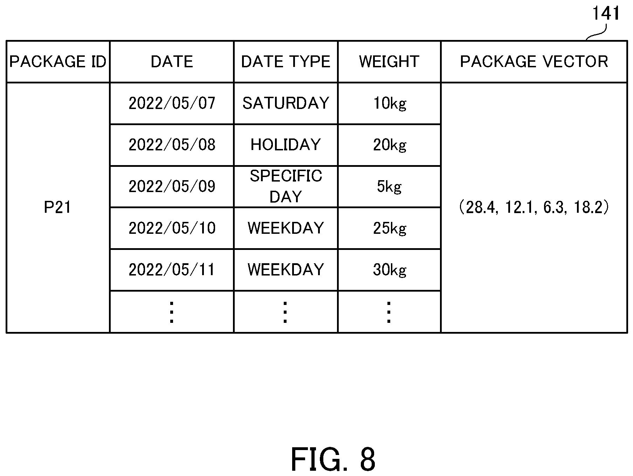

FIG. 8 depicts one example of generation of a package vector for each package ID.

The information processing apparatus 100 generates a package vector for each package ID as indicated in table 141. The information processing apparatus 100 extracts a plurality of records including the same package ID from the package table 132. The information processing apparatus 100 refers to the calendar 131, determines the date type from the date of each record, and classifies the plurality of records into the four date types.

The information processing apparatus 100 calculates a representative value of weight for each type of date, and arranges the representative value of weekdays, the representative value of Saturdays, the representative value of specific days, and the representative value of holidays in that order to generate a four-dimensional package vector. When doing so, the information processing apparatus 100 sets the representative value at zero for any date type where the package occurrence frequency is below a threshold p1. The occurrence frequency of packages is the ratio of dates on which the weight of packages indicated by the package ID is not zero, out of the dates appearing in the package table 132. The threshold p1 is a parameter whose value is adjusted by a method described later.

The information processing apparatus 100 calculates average value + coefficient p2 × standard deviation as a representative value based on the classified records for date types whose occurrence frequency is equal to or higher than the threshold p1. The coefficient p2 is a parameter whose value is adjusted according to a method described later. The representative value may be the mean, median, or a quartile.

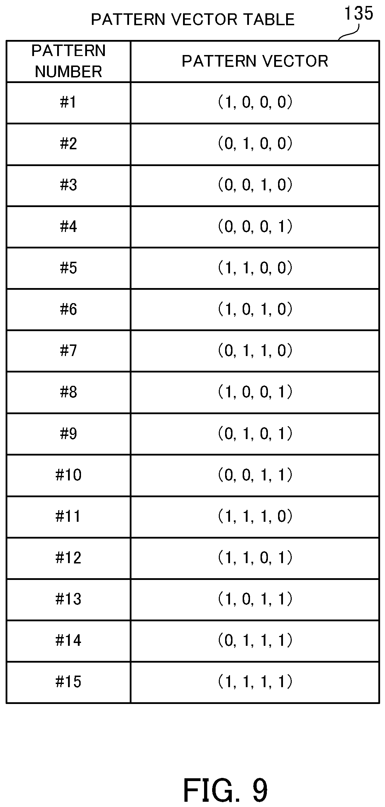

FIG. 9 depicts an example of a pattern vector table.

The information processing apparatus 100 stores a pattern vector table 135 corresponding to the pattern table 133. The pattern vector table 135 defines pattern vectors corresponding to the fifteen date patterns. A pattern vector may also be referred to as a "day type combination vector", a "date type combination vector", or the like.

Each pattern vector has four dimensions corresponding to weekdays, Saturdays, specific days, and holidays. In a pattern vector, date types included in the date pattern are expressed as 1, and date types not included in the date pattern are expressed as 0. Accordingly, as one example, the pattern vector corresponding to date pattern #6, which includes weekdays and specific days but does not include Saturdays and holidays, is (1,0,1,0). As another example, the pattern vector corresponding to date pattern #11, which includes weekdays, Saturdays, and specific days but does not include holidays, is (1,1,1,0).

The information processing apparatus 100 compares the package vector with each of the fifteen pattern vectors for each package ID, and calculates the cosine similarity. The cosine similarity is an index indicating the similarity between two vectors, and takes a value of -1 or higher and 1 or lower. The higher the cosine similarity, the greater the similarity between the two vectors. For two vectors a and b, the cosine similarity is calculated by (a·b) ÷ (|a||b|). Here, (a·b) represents the inner product of the vectors a and b, |a| represents the magnitude of the vector a, and |b| represents the magnitude of the vector b.

The information processing apparatus 100 assigns the package ID to the date pattern corresponding to the pattern vector with the highest cosine similarity. However, the date pattern with the highest cosine similarity will not necessarily cover all date types with non-zero representative values in the package vectors. For this reason, as described below, the information processing apparatus 100 may divide the package vector and assign the package IDs by dividing the package vector between two or more date patterns.

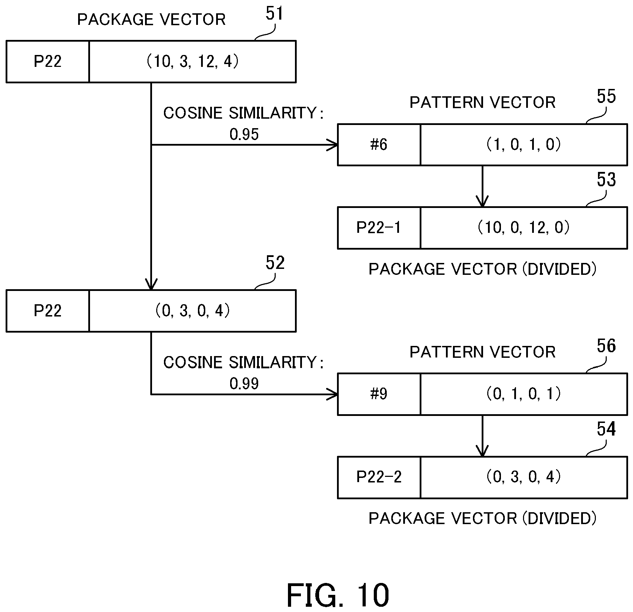

FIG. 10 depicts an example of division and classification of a package vector.

The information processing apparatus 100 generates a package vector 51 for a given package ID. All four elements of the package vector 51 are non-zero. The information processing apparatus 100 compares the package vector 51 with each of the fifteen pattern vectors, and determines that the cosine similarity with a pattern vector 55 corresponding to date pattern #6 is the highest at 0.95.

The information processing apparatus 100 then extracts dimension elements whose value in the pattern vector 55 is one from the package vector 51 to generate a package vector 53 in which the other dimension elements are set at zero. The information processing apparatus 100 assigns the package vector 53 produced by division from the package vector 51 to date pattern #6. When doing so, the information processing apparatus 100 may assign the original package ID and a new package ID for identifying the package vector 53 to the package vector 53.

Next, the information processing apparatus 100 calculates a package vector 52, which is obtained by subtracting the package vector 53 from the package vector 51, as a residual package vector. The information processing apparatus 100 determines whether the package vector 52 includes any non-zero elements. When there is a non-zero element, the information processing apparatus 100 repeats the same processing as described above for the package vector 52.

The information processing apparatus 100 compares the package vector 52 with each of the fifteen pattern vectors and determines that the cosine similarity with the pattern vector 56 corresponding to date pattern #9 is the highest at 0.99. After this, the information processing apparatus 100 extracts dimension elements whose value is 1 in the pattern vector 56 from the package vector 52 and generates a package vector 54 by setting the other dimension elements at zero. The information processing apparatus 100 assigns the package vector 54 that has been produced by division from the package vector 51 to date pattern #9. Since this results in the residual package vector becoming a zero vector, the primary assignment of package IDs ends.

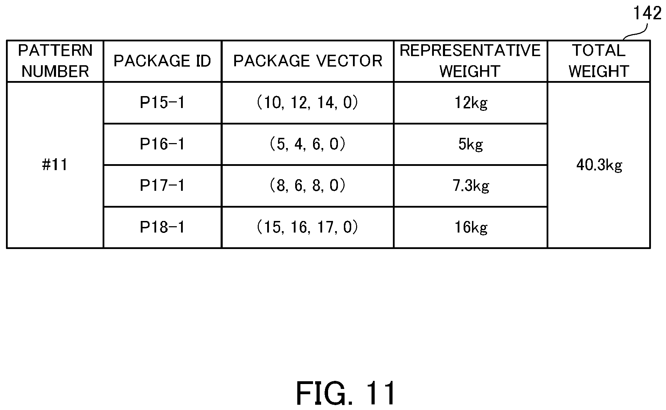

FIG. 11 depicts an example calculation of the total weight for each date pattern.

The information processing apparatus 100 calculates the total weight for each date pattern as indicated in table 142. First, for a given date pattern, the information processing apparatus 100 calculates a representative weight of each of a plurality of package IDs assigned to that date pattern.

The representative weights are average values of the weights corresponding to the date types included in the date pattern, out of the weights included in the package vector. The weights corresponding to the date types included in the date pattern are dimension elements whose value is 1 in the pattern vector, out of the elements included in the package vector. However, the representative weight may be the highest value of the weights corresponding to the date types included in the date pattern out of the weights included in the package vector. The package vectors used here are package vectors after division by the method in FIG. 10. The information processing apparatus 100 sums the representative weights of a plurality of package IDs to calculate the total weight of the given date pattern.

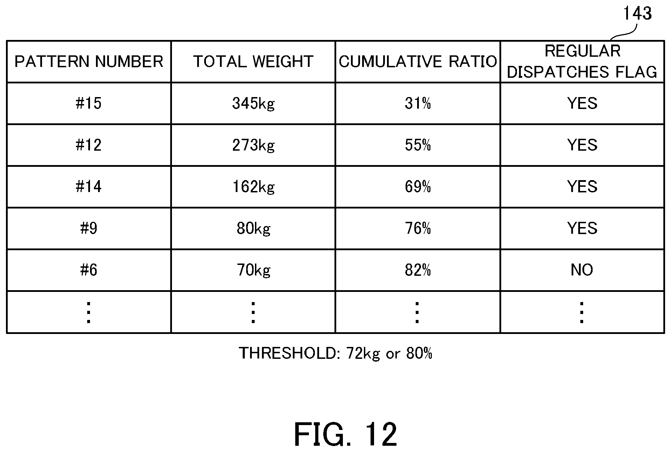

FIG. 12 depicts one example of determining date patterns to be used for planning regular dispatches.

The information processing apparatus 100 calculates the total weights of each of the fifteen date patterns. The information processing apparatus 100 sorts the fifteen date patterns in descending order of total weight as indicated in a table 143. The information processing apparatus 100 selects date patterns for which the total weight is equal to or greater than a threshold p3 from the fifteen date patterns as date patterns for generating regular dispatches. As a general rule, regular dispatches are not generated for date patterns where the total weight is less than the threshold p3. The threshold p3 is a parameter whose value is adjusted by a method described later.

However, instead of selecting a date pattern where the total weight is equal to or greater than the threshold p3, the information processing apparatus 100 may select a date pattern where a cumulative ratio of total weight is equal to or less than a threshold. The "cumulative ratio" of each date pattern is the ratio obtained by dividing the sum of the total weight of that date pattern and the total weight of higher-order date patterns by the sum of the total weights of the fifteen date patterns. In the example in FIG. 12, the total weight threshold is 72 kg and the threshold for the cumulative ratio is 80%, so that date patterns #15, #12, #14, and #9 are selected.

The information processing apparatus 100 additionally selects date patterns that satisfy a certain exception condition, in spite of the total weight or the cumulative ratio being less than the threshold, as date patterns for creating regular dispatches. An exception condition is a date pattern with a pattern vector that has zero cosine similarity with the pattern vector of any date pattern that has already been selected. This determination of whether the exception condition is satisfied is preferentially performed from the date pattern with the largest total weight.

As one example, consider a case where date pattern #4 has not been selected and date patterns #3, #5, #6, #7, and #11 have been selected. In this case, the cosine similarity between the pattern vector of date pattern #4 and any of the pattern vectors of date patterns #3, #5, #6, #7, and #11 is zero. That is, none of the selected date patterns #3, #5, #6, #7, and #11 includes holidays. In this case, the information processing apparatus 100 additionally selects the date pattern #4 as a date pattern for generating regular dispatches.

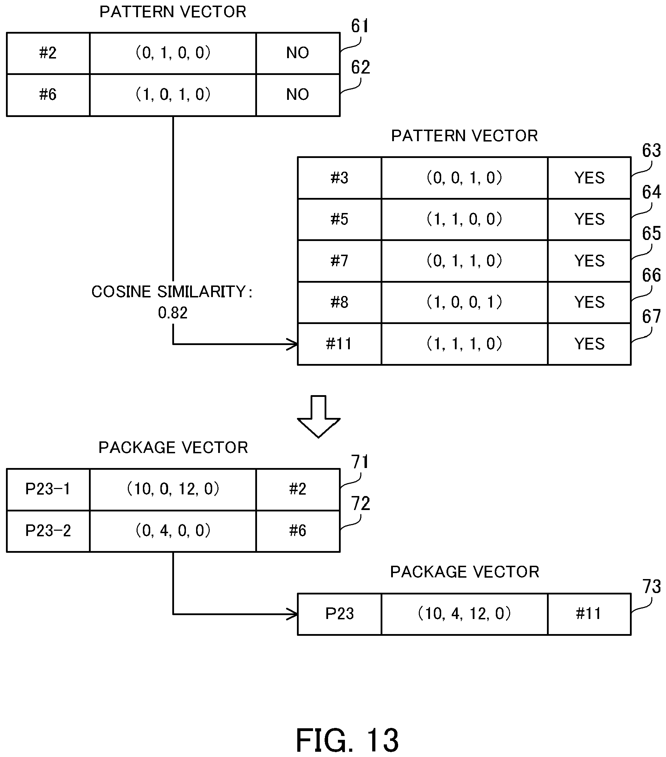

FIG. 13 depicts an example reclassification of package vectors.

When there is a package ID assigned to a date pattern for which regular dispatches are not generated, the information processing apparatus 100 reclassifies that package ID into any date pattern that generates regular dispatches. The date pattern to which this reclassification is performed is a date pattern, out of the date patterns that generate regular dispatches, with the highest cosine similarity with the pattern vector of the date pattern for which regular dispatches are not generated. When this reclassification causes package vectors that have been divided from the same package ID to be aggregated into the same date pattern, the information processing apparatus 100 combines the divided package vectors.

As one example, pattern vectors 61 and 62 correspond to the unselected date patterns #2 and #6. Pattern vectors 63, 64, 65, 66 and 67 correspond to the selected date patterns #3, #5, #7, #8 and #11. Out of the pattern vectors 63, 64, 65, 66, and 67, the pattern vector 67 has the highest cosine similarity with the pattern vector 62 at 0.82. In this case, the information processing apparatus 100 reclassifies the package vector 72 that was classified to date pattern #6 into date pattern #11.

In addition, the information processing apparatus 100 reclassifies the package vector 71 that was classified to date pattern #2 into date pattern #11. The package vectors 71 and 72 were originally divided from the same package ID. The package vector 71 includes non-zero elements corresponding to weekdays and specific days, and the package vector 72 includes a non-zero element corresponding to Saturdays. In this case, the information processing apparatus 100 combines the package vectors 71 and 72 to generate the package vector 73. The package vector 73 includes non-zero elements corresponding to weekdays, Saturdays and specific days.

In this way, package IDs are assigned to date patterns selected out of the fifteen date patterns based on the total weights. The information processing apparatus 100 calculates the representative weights used in the regular dispatches learning table 134 based on the package vectors corresponding to the assigned package IDs. These package IDs may be package IDs after division, and the package vector may be a package vector produced by division. The representative weight is the average value of the weights corresponding to the date types included in the date pattern, out of the weights included in the package vector. However, the representative weight may be the highest weight value corresponding to the date types included in that date pattern.

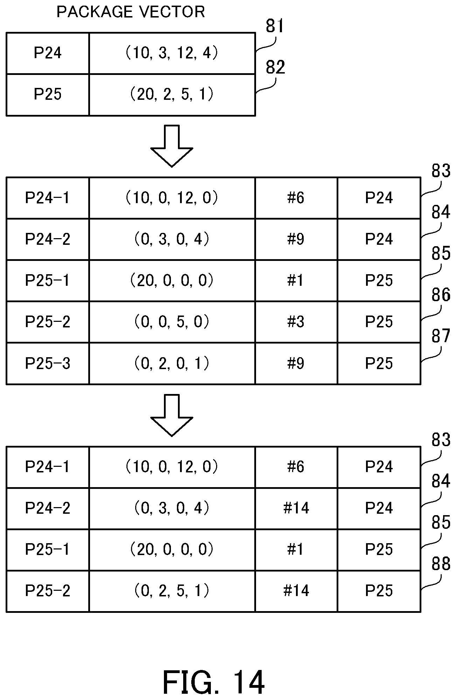

FIG. 14 depicts one example of division, classification, and reclassification of a package vector.

Here, another numerical example of package vectors will be described. A package vector 81 is a package vector for a given package ID. The package vector 82 is a package vector for another package ID.

The information processing apparatus 100 divides the package vector 81 into package vectors 83 and 84. The information processing apparatus 100 assigns the package vector 83 to date pattern #6 and the package vector 84 to date pattern #9. The information processing apparatus 100 also divides the package vector 82 into package vectors 85, 86, and 87. The information processing apparatus 100 assigns the package vector 85 to date pattern #1, the package vector 86 to date pattern #3, and the package vector 87 to date pattern #9.

The information processing apparatus 100 selects date patterns #1, #6, and #14 as date patterns for generating regular dispatches, and does not select date patterns #3 and #9. The information processing apparatus 100 then reassigns the package vector 84 to date pattern #14. The information processing apparatus 100 also reassigns the package vectors 86 and 87 to date pattern #14. Since the package vectors 86 and 87 were divided from the package vector 82, the information processing apparatus 100 combines the package vectors 86 and 87 into the package vector 88.

In the optimization of regular dispatches described above, the parameters p1 and p2 are used to generate the package vectors and the parameter p3 is used to select the date patterns to be used for generating the regular dispatches. The values of the parameters p1, p2 and p3 therefore affect the optimization result. For this reason, the information processing apparatus 100 may repeat the generation of a delivery plan and the calculation of an evaluation value while changing the values of the parameters p1, p2, and p3 and optimize the values of the parameters p1, p2, and p3 so as to obtain the best evaluation value. As one example, the steepest descent method is used as the optimization algorithm.

When the regular delivery plan has been determined, the logistics business operates the regular dispatches according to the schedule that has been determined for each date type. In addition, the logistics business monitors the occurrence of packages and operates an extra dispatch when there is a package that is not deliverable by the regular dispatches. The information processing apparatus 100 may also be used for planning such extra dispatches. For example, the information processing apparatus 100 receives package data indicating packages scheduled for delivery, extracts packages that are not handled by regular dispatches, and uses the VRPTW solver to determine optimal extra dispatches. Optimizing the extra dispatches includes minimizing the number of extra dispatches to be operated.

Next, the functions and processing procedure of the information processing apparatus 100 will be described.

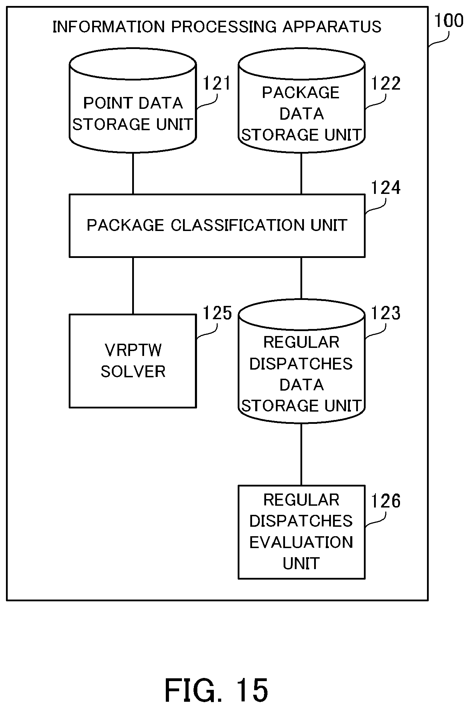

FIG. 15 is a block diagram illustrating example functions of the information processing apparatus.

The information processing apparatus 100 includes a point data storage unit 121, a package data storage unit 122, a regular dispatches data storage unit 123, a package classification unit 124, a VRPTW solver 125, and a regular dispatches evaluation unit 126. The point data storage unit 121, the package data storage unit 122, and the regular dispatches data storage unit 123 are implemented using the RAM 102 or the HDD 103, for example. The package classification unit 124, the VRPTW solver 125, and the regular dispatches evaluation unit 126 are implemented using the CPU 101 and programs, for example.

The point data storage unit 121 stores point data indicating the adjacency between points. As described earlier, point data may be represented as a weighted undirected graph. The point data indicates travel distances and travel times between a plurality of points.

The package data storage unit 122 stores package data indicating packages delivered in the past. The package table 132 described earlier is stored in this package data storage unit 122. The package data storage unit 122 also stores a calendar indicating the days of the week and holidays for a plurality of days. The calendar 131 described earlier is stored in this package data storage unit 122. The package data storage unit 122 also stores the pattern vector table 135.

The regular dispatches data storage unit 123 stores regular dispatches data indicating regular dispatches for each date type. The regular dispatches data is generated using the VRPTW solver 125. The regular dispatches data indicates, for each of the plurality of regular dispatches, the plurality of points through which the regular dispatch passes and the arrival and departure times at each point.

The package classification unit 124 classifies the package IDs into fifteen date patterns using the method described earlier, and generates the regular dispatches learning table 134. The package classification unit 124 defines, for each date pattern, an objective function and constraints based on the regular dispatches learning table 134, calls the VRPTW solver 125, and receives a schedule of regular dispatches from the VRPTW solver 125. The package classification unit 124 organizes the schedule of regular dispatches for each date pattern, determines the schedule of the regular dispatches for each date type, and stores regular dispatches data in the regular dispatches data storage unit 123.

The VRPTW solver 125 is a mathematical programming solver that solves the vehicle routing problem with time window (VRPTW). The VRPTW solver 125 receives an objective function and constraints. The VRPTW solver 125 searches for an optimal solution that minimizes or maximizes the value of the objective function within a range that satisfies the constraints, and outputs the discovered optimal solution.

The regular dispatches evaluation unit 126 calculates an evaluation value for the regular dispatches data stored in the regular dispatches data storage unit 123 using the package data stored in the package data storage unit 122. The evaluation value indicates a total cost that includes a management cost which is proportional to the number of types of regular dispatches and an operation cost proportional to the number of operated delivery dispatches and the travel distance.

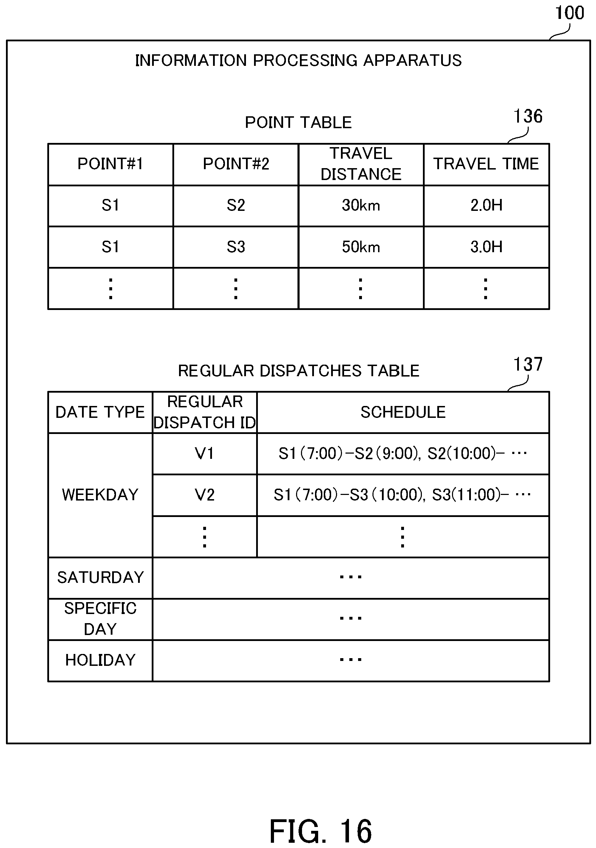

FIG. 16 depicts an example of a point table and a regular dispatches table.

A point table 136 is stored in the point data storage unit 121. The point table 136 associates point#1, point#2, a travel distance, and a travel time. Point#1 is a point name indicating one of two points. Point#2 is a point name indicating the other of the two points. The travel distance is the distance of the route on which a delivery dispatch travels between the two points. The travel time is the time needed for a delivery dispatch to move between the two points.

A regular dispatches table 137 is stored in the regular dispatches data storage unit 123. The regular dispatches table 137 associates a date type, regular dispatch IDs, and schedules. The date type is weekday, Saturday, specific day, or holiday. The regular dispatch ID is an identifier that identifies the type of regular dispatch. Regular dispatches with the same regular dispatch ID may be operated on days of different date types. Each schedule indicates a plurality of points via which a regular dispatch passes and the scheduled arrival and departure times at each point.

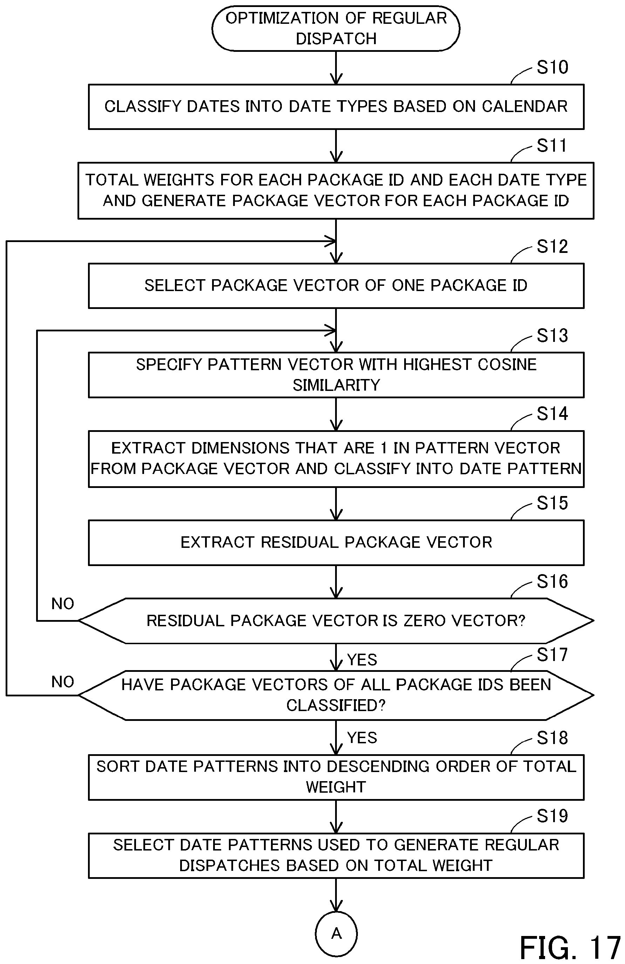

FIG. 17 is a flowchart depicting an example procedure of optimization of regular dispatches.

(S10) The package classification unit 124 classifies the dates indicated in the package data based on the calendar into the four date types that are weekdays, Saturdays, specific days, and holidays.

(S11) The package classification unit 124 classifies the records included in the package data for each package ID and each date type, and totals the weights included in the records. The package classification unit 124 generates a package vector in which representative weight values for weekdays, Saturdays, specific days, and holidays are listed for each package ID.

(S12) The package classification unit 124 selects a package vector for one package ID.

(S13) The package classification unit 124 calculates the cosine similarity between the package vector and each of the fifteen pattern vectors corresponding to the fifteen date patterns. The package classification unit 124 then specifies the pattern vector with the highest cosine similarity.

(S14) The package classification unit 124 extracts elements of dimensions whose value is 1 in the specified pattern vector from the package vector used in step S13, and generates a divided package vector where the other dimensions are set at zero. The package classification unit 124 classifies the generated divided package vector into the date pattern corresponding to the specified pattern vector.

(S15) The package classification unit 124 calculates a residual package vector by subtracting the divided package vector in step S14 from the package vector used in step S13.

(S16) The package classification unit 124 determines whether the residual package vector is a zero vector in which every dimension is zero. When the residual package vector is the zero vector, the processing proceeds to step S17. When the residual package vector is not the zero vector, the processing returns to step S13 and steps S13 to S15 described above are performed on the residual package vector.

(S17) The package classification unit 124 determines whether the package vectors of all package IDs have been classified into date patterns. When the package vectors of all package IDs have been classified, the processing proceeds to step S18, and when there is an unclassified package vector, the processing returns to step S12.

(S18) The package classification unit 124 calculates the total weight based on the classified package vectors for each of the fifteen date patterns. The package classification unit 124 sorts the fifteen date patterns into descending order of total weight.

(S19) Based on the total weights, the package classification unit 124 determines the date patterns for generating regular dispatches from the fifteen date patterns. As one example, the package classification unit 124 selects date patterns whose total weight is equal to or greater than a threshold. In addition, when there is a date type that is not included in any of the selected date patterns, the package classification unit 124 exceptionally selects one or more date patterns from the date patterns whose total weights are less than the threshold.

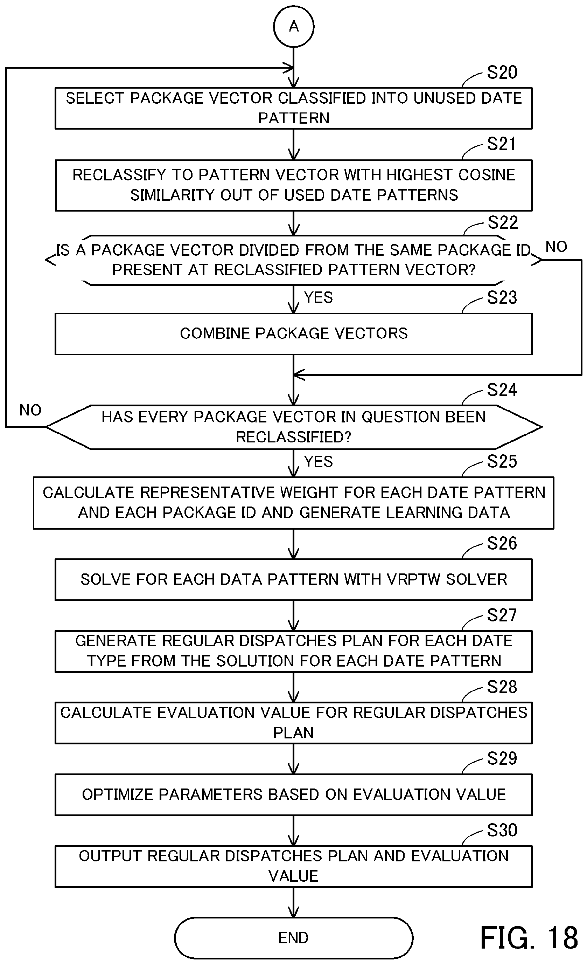

FIG. 18 is a second part of the flowchart depicting an example procedure of optimization of regular dispatches.

(S20) The package classification unit 124 selects one package vector that has been classified into a date pattern excluded from the generation of regular dispatches.

(S21) The package classification unit 124 calculates the cosine similarity between the package vector selected in step S20 and the respective pattern vectors of the date patterns that have been selected for use in generating regular dispatches. The package classification unit 124 reclassifies the selected package vector into the selected date pattern that has the highest cosine similarity.

(S22) The package classification unit 124 determines whether there is another package vector produced by division from the same package ID in the date pattern to which the package vector has been reclassified. When there is such a package vector, the processing proceeds to step S23 and when there is no such package vector, the processing proceeds to step S24.

(S23) The package classification unit 124 combines the reclassified package vector and the other package vector. In more detail, the package classification unit 124 adds the two package vectors together.

(S24) The package classification unit 124 determines whether every package vector that was classified into a date pattern not used for generating regular dispatches has been reclassified. When every package vector has been reclassified, the processing proceeds to step S25, and when there is a package vector that has not been reclassified, the processing returns to step S20.

(S25) The package classification unit 124 calculates a representative weight based on the package vector for each date pattern and for each package ID. The package classification unit 124 generates learning data in which a date pattern, departure/arrival restrictions of packages indicated by package IDs, and the calculated representative weights are associated with each other.

(S26) The VRPTW solver 125 solves the vehicle routing problem with time window based on the learning data for each date pattern used to generate regular dispatches, and generates a regular dispatches plan.

(S27) The package classification unit 124 generates a regular dispatches plan for each date type based on the regular dispatches plan for each date pattern generated in step S26.

(S28) The regular dispatches evaluation unit 126 calculates an evaluation value of the regular dispatches plan for each date type.

(S29) The information processing apparatus 100 repeats steps S11 to S28 described above while changing the values of the parameters p1 and p2 used in step S11 and the value of the parameter p3 used in step S19 until the evaluation value satisfies a convergence condition. By doing so, the values of the parameters p1, p2, and p3 are optimized so as to minimize the evaluation value.

(S30) The information processing apparatus 100 outputs the optimal regular dispatches plan and the evaluation value. The information processing apparatus 100 may store the regular dispatches plan and the evaluation value in non-volatile storage, display the regular dispatches plan and the evaluation value on the display apparatus 111, or transmit the regular dispatches plan and the evaluation value to another information processing apparatus.

As described above, the information processing apparatus 100 according to the second embodiment uses a VRPTW solver to optimize the operation schedule of regular dispatches so as to reduce the cost. This makes the logistics business more efficient. In addition, the information processing apparatus 100 classifies the package IDs into date patterns indicating a combination of a plurality of date types and performs optimization in date pattern units. By doing so, compared to a case where optimization is performed in units of date types, the number of regular dispatches that operate on a common schedule across different date types increases, which reduces the indirect management cost.

The information processing apparatus 100 also generates, for each package ID, a package vector indicating the distribution of the package amounts between a plurality of date types, and determines, based on the degree of similarity with pattern vectors indicating date patterns, the correspondence between package IDs and date patterns. By doing so, the burden on the person in charge is reduced compared to the case where such associating is performed manually by trial and error. The package IDs and date patterns are associated with high accuracy even when the addition of new points and/or the consolidation of existing points make it difficult to make use of the past experience and knowledge of workers.

The information processing apparatus 100 may also divide an original package vector and classify the package vector into two or more date patterns. By doing so, a higher proportion of packages will be covered by regular dispatches, thereby reducing costly extra dispatches. The information processing apparatus 100 narrows down the date patterns to be used for generating regular dispatches based on the total package amounts of the classified packages. As a result, inefficient regular dispatches carrying few packages to be delivered are suppressed. In addition, the information processing apparatus 100 reclassifies packages that are classified into unused date patterns into any of the date patterns in use. By doing so, the proportion of packages covered by regular dispatches increases, which reduces costly extra dispatches.

The information processing apparatus 100 optimizes the values of the parameters used in the above processing based on the evaluation value of the regular dispatches. By doing so, the burden of manually adjusting the parameter values by trial and error is reduced, and a more efficient operation schedule for regular dispatches is generated.

According to one aspect of the present disclosure, it is possible to efficiently generate a regular delivery plan.

## Claims

1. A delivery plan generation program that causes a computer to execute a process comprising:
generating, based on package data (13) in which dates, attributes of packages, and package amounts are associated and for each of the attributes, a first vector (14a, 14b) indicating statistical values for the package amounts on each of a plurality of date types;
assigning, based on similarity between the first vector and each of a plurality of second vectors (16a to 16c) which correspond to a plurality of different date patterns (15a to 15c) where each date pattern indicates at least one date type out of the plurality of date types, each of the attributes to at least one date pattern out of the plurality of date patterns; and
generating plan data indicating delivery dispatches for delivering packages corresponding to the assigned attributes for each of at least one date pattern out of the plurality of date patterns.

2. The delivery plan generation program according to claim 1,
wherein the plurality of second vectors (135) include non-zero elements corresponding to selected date types out of the plurality of day types and zero elements corresponding to non-selected date types.

3. The delivery plan generation program according to claim 1,
wherein the assigning includes assigning an attribute to a first date pattern (55) based on the similarity and additionally assigning, when the first date pattern does not include date types corresponding to a non-zero statistical value in the first vector (51), the attribute to a second date pattern (56) including a corresponding date type.

4. The delivery plan generation program according to claim 1,
wherein the process further includes calculating, for each of the plurality of date patterns, a total value (142) of the package amounts using the first vectors corresponding to the assigned attributes and selecting the at least one date pattern based on the total values.

5. The delivery plan generation program according to claim 1,
wherein the process further includes reassigning, based on similarity between the plurality of second vectors, the attribute assigned to a first date pattern (61, 62) not included in the at least one date pattern out of the plurality of date patterns, to a second date pattern (67) included in the at least one date pattern.

6. The delivery plan generation program according to claim 1,
wherein the generating of the plan data includes calculating, for each of the at least one date pattern, a representative value of the package amounts using the first vectors corresponding to the assigned attributes and deciding the delivery dispatches based on correspondence (134) between the attributes and the representative values.

7. The delivery plan generation program according to claim 1,
wherein the process further includes deciding, for each of the plurality of date types, delivery dispatches (137) that operate on dates corresponding to the date type, using the plan data generated for a date pattern including the date type out of the at least one date pattern.

8. The delivery plan generation program according to claim 1,
wherein the process further includes calculating an evaluation value indicating a cost of the delivery dispatches based on the plan data, and changing at least one of a first parameter value, which is used in generation of the first vectors, and a second parameter value, which is used in selection of the at least one date pattern, based on the evaluation value (S28, S29).

9. The delivery plan generation program according to claim 1,
wherein the attributes include departure location, departure time, arrival location, and arrival time.

10. A delivery plan generation method executed by a computer, the delivery plan generation method comprising:
generating, based on package data (13) in which dates, attributes of packages, and package amounts are associated and for each of the attributes, a first vector (14a, 14b) indicating statistical values for the package amounts on each of a plurality of date types;
assigning, based on similarity between the first vector and each of a plurality of second vectors (16a to 16c) which correspond to a plurality of different date patterns (15a to 15c) where each date pattern indicates at least one date type out of the plurality of date types, each of the attributes to at least one date pattern out of the plurality of date patterns; and
generating plan data indicating delivery dispatches for delivering packages corresponding to the assigned attributes for each of at least one date pattern out of the plurality of date patterns.

11. An information processing apparatus comprising:
storage means (11) for storing package data (13) in which dates, attributes of packages, and package amounts are associated; and
processing means (12) for generating, based on the package data and for each of the attributes, a first vector (14a, 14b) indicating statistical values for the package amounts on each of a plurality of date types, assigning, based on similarity between the first vector and each of a plurality of second vectors (16a to 16c) which correspond to a plurality of different date patterns (15a to 15c) where each date pattern indicates at least one date type out of the plurality of date types, each of the attributes to at least one date pattern out of the plurality of date patterns, and generating plan data indicating delivery dispatches for delivering packages corresponding to the assigned attributes for each of at least one date pattern out of the plurality of date patterns.
